# FASCICULE DE BREVET EUROPEEN

(11) **EP 3 765 771 B1**
(45) Date de publication et mention de la délivrance du brevet: **02.03.2022**
(21) Numéro de dépôt: 19707846.2
(22) Date de dépôt: 06.03.2019
(51) Int. Cl.: F16K 31/06, F16K 31/08, F16K 37/00

(54) **ACTIONNEUR DE VANNE, VANNE ET MACHINE CORRESPONDANTES**
VENTILANTRIEB, ENTSPRECHENDES VENTIL UND ENTSPRECHENDE MASCHINE
VALVE ACTUATOR, CORRESPONDING VALVE AND CORRESPONDING MACHINE

(30) Priorité: 16.03.2018 FR 1852267
(43) Date de publication de la demande: 20.01.2021
(73) Titulaire: SERAC Group, 72400 La Ferte Bernard (FR)
(72) Inventeur: GRUSON, Bertrand, 50290 BREVILLE SUR MER (FR)
(74) Mandataire: Decorchemont, Audrey Véronique Christèle
(86) Numéro de dépôt international: PCT/EP2019/055608
(87) Numéro de publication internationale: WO 2019/175000

(56) Documents cités:
- DE-A1-102009 021 639
- GB-A- 2 271 668
- JP-A- H11 248 025
- JP-A- H11 315 950
- US-A1- 2005 279 415
- US-A1- 2006 145 797

## Description

L'invention concerne un actionneur de vanne.

L'invention concerne également une vanne équipée d'un tel actionneur.

L'invention concerne également une machine comprenant une telle vanne et un tel actionneur comme par exemple, et de manière non limitative, une machine de transport de récipients.

### ARRIERE PLAN TECHNOLOGIQUE DE L'INVENTION

Afin de permettre la mise en relation d'une entrée avec deux sorties différentes, il est aujourd'hui connu des vannes dites trois voies.

Ces vannes sont associées généralement à des actionneurs de vannes pneumatiques ce qui est incompatible avec les milieux aseptiques répondant à des normes d'hygiène et de sécurité très strictes. Dès lors pour pouvoir utiliser ce type de vannes dans un milieu aseptique, il conviendrait d'agencer l'actionneur hors du milieu aseptique visé ce qui est bien entendu peu pratique.

Pour pallier cet inconvénient on a envisagé d'avoir recours à des actionneurs de vannes électriques. Toutefois, l'actionneur a alors tendance à s'échauffer rapidement en fonctionnement ce qui est d'autant plus problématique que l'actionneur est parfois soumis à des contraintes de températures déjà importantes. US2005/279415 décrit un actionneur de vanne selon le préambule de la revendication 1.

### OBJET DE L'INVENTION

Un but de l'invention est de proposer un actionneur de vanne moins sujet à l'échauffement.

Un but de l'invention est également de proposer une vanne équipée d'un tel actionneur.

Un but de l'invention est également de proposer une machine comprenant un tel actionneur et une telle vanne.

### BREVE DESCRIPTION DE L'INVENTION

L'invention concerne ainsi un actionneur de vanne comprenant un équipage mobile agencé pour faire coulisser un tampon dudit équipage selon un axe donné entre deux positions d'extrémité, permettant en service au tampon de mettre en liaison un canal d'admission de la vanne avec au moins une sortie de ladite vanne, l'équipage mobile comprenant un noyau solidaire en translation du tampon selon l'axe donné.

Selon l'invention, l'actionneur comprend une bobine entourée de deux anneaux en matériau ferromagnétique, tous trois solidaires d'un châssis de l'actionneur de manière à entourer le noyau qui porte lui-même deux aimants montés en opposition sur le noyau au niveau de la bobine, un anneau en matériau ferromagnétique séparant les deux aimants également encadrés extérieurement par deux autres anneaux en matériau ferromagnétique,

l'alimentation de la bobine provoquant l'attraction de l'un des aimants et la répulsion de l'autre des aimants portés par le noyau selon le sens d'alimentation de la bobine, la coopération du couple d'anneaux du châssis avec respectivement l'un des couples d'anneaux du noyau assurant le verrouillage du tampon dans chacune de ses positions d'extrémités lorsque la bobine cesse d'être alimentée, l'équipage mobile comprenant par ailleurs au moins deux éléments élastiquement déformables liés au noyau de manière que les couples d'anneaux du noyau se trouvent décalés du couple d'anneaux du châssis lors du verrouillage du tampon dans chacune de ses positions d'extrémité.

De la sorte, l'invention limite un risque de surchauffe de l'actionneur, la bobine n'étant alimentée que le temps de faire basculer le noyau (et donc le tampon) d'une position à une autre. Ce laps de temps est avantageusement court (de l'ordre de quelques dizaines de millisecondes) ce qui limite considérablement l'échauffement de la bobine et donc de l'actionneur.

De façon avantageuse, une simple impulsion électrique suffit pour provoquer le passage du tampon d'une position à une autre.

Un tel actionneur vanne est avantageusement utilisable dans les milieux aseptiques de par l'utilisation de l'énergie électrique.

On note que les éléments élastiquement déformables sont agencés de manière à ce que chaque couple d'anneaux du noyau se trouve décalé du couple d'anneaux du châssis lorsque le noyau est verrouillé : de la sorte lors de l'alimentation de la bobine les éléments élastiquement déformables facilitent le basculement du noyau (et donc du tampon) d'une position à une autre.

Optionnellement, les éléments élastiquement déformables sont des ressorts.

Optionnellement, un premier ressort de l'équipage mobile est agencé entre le noyau et le châssis et un deuxième ressort de l'équipage mobile est agencé entre le tampon et un corps de la vanne.

Optionnellement, l'équipage mobile comporte un troisième ressort agencé entre le noyau et le tampon.

Optionnellement, l'équipage mobile comporte un élément d'étanchéité agencé entre le tampon et le châssis de l'actionneur.

Optionnellement, l'élément d'étanchéité est un soufflet.

Optionnellement, l'actionneur comporte un capteur de proximité pour détecter la position du noyau.

Optionnellement, le capteur est un capteur inductif.

L'invention concerne également une vanne comprenant un tel actionneur de vanne.

L'invention concerne également une machine comprenant un tel actionneur de vanne et une telle vanne.

Optionnellement, la machine comporte une unité de commande reliée à l'actionneur pour gérer l'alimentation par impulsion de la bobine de l'actionneur.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées cijointes parmi lesquelles :
- la figure 1 est une vue en coupe d'un actionneur de vanne selon un mode de réalisation particulier de l'invention et de la vanne associée, le tampon étant dans une première de ses deux positions d'extrémités,
- la figure 2 est une vue en coupe de l'actionneur et de la vanne illustrés à la figure 1 lorsque le tampon est dans la deuxième de ses deux positions d'extrémités,

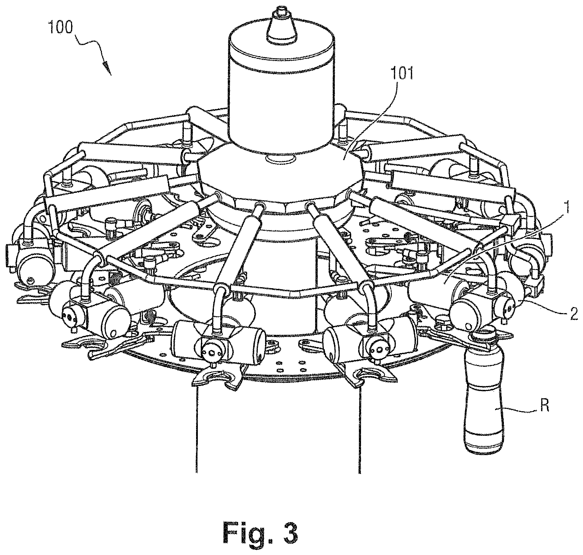

- la figure 3 est une vue en trois dimensions d'une partie d'une machine comprenant l'actionneur et la vanne illustrés à la figure 1.

### DESCRIPTION DETAILLEE D'UN MODE DE REALISATION PARTICULIER DE L'INVENTION

En référence aux différentes figures, l'actionneur de vanne, généralement désigné en 1, selon un mode de réalisation particulier de l'invention est associé à une vanne, généralement désignée en 2. La vanne 2 comporte ici un corps de vanne 3a dans lequel sont ménagés deux sorties 4, 5 et un canal d'admission 6 raccordé aux deux sorties 4, 5, ledit corps de vanne 3a étant fermé à une deuxième de ses extrémités par un couvercle 3b de la vanne 2, l'actionneur 1 étant monté sur la vanne 2 au niveau de la première extrémité du corps de vanne 3a. La vanne 2 est donc ici une vanne dite trois voies.

Ladite vanne 2 et ledit actionneur 1 sont montés conjointement sur un carrousel 101 d'une machine, généralement désignée en 100, comme par exemple une machine de transport de récipients R (comme une machine de décontamination de récipients, une machine de remplissage de récipients ...). Dans le cas présent, le carrousel 101 est équipé d'une pluralité de vannes et d'actionneurs de vannes identiques et conformés selon le mode de réalisation particulier de l'invention.

La vanne 1 comporte un tampon 7 s'étendant dans la vanne 2 de sorte à pouvoir ici translater entre deux positions d'extrémités selon un axe X donné au niveau du raccordement entre le canal d'admission 6 et les deux sorties 4, 5.

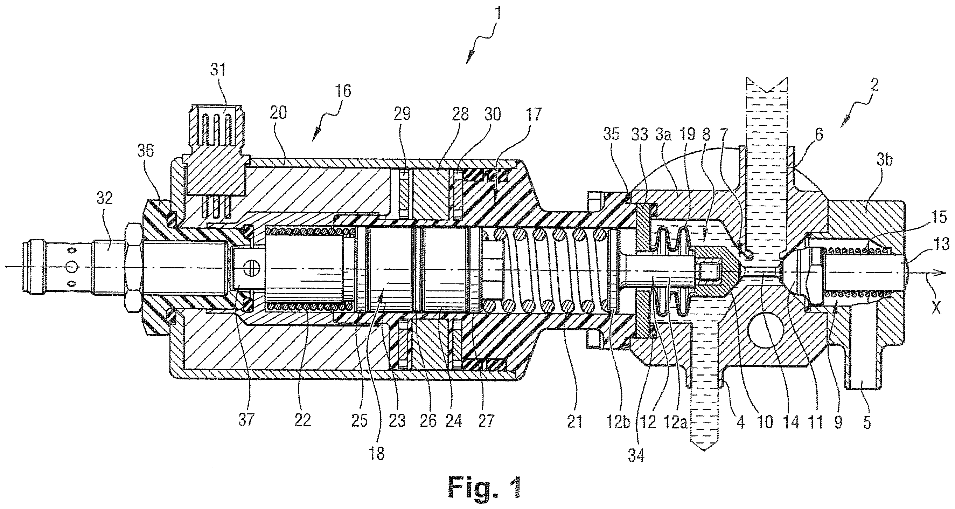

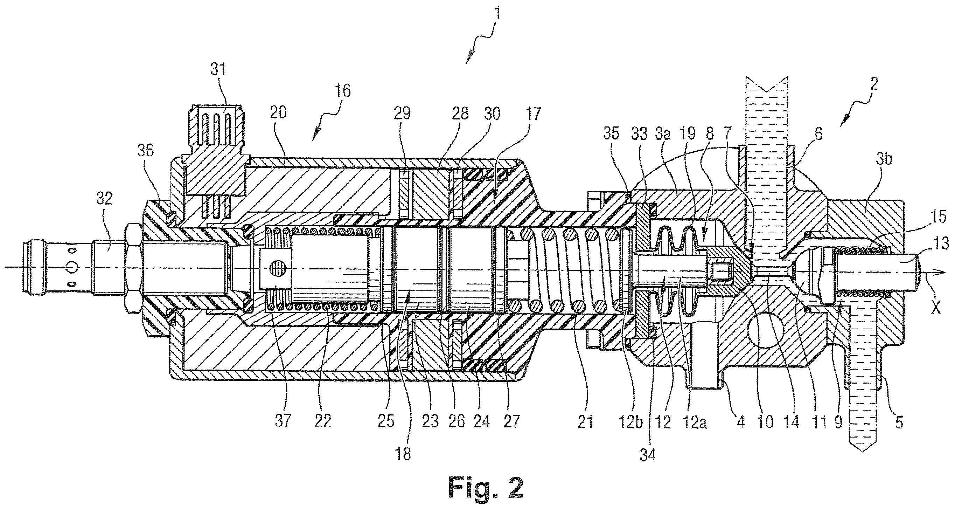

Dans une première position d'extrémité, le tampon 7 permet la mise en liaison du canal d'admission 6 avec la première sortie 4 (comme illustré à la figure 1) tout en bloquant le passage d'un fluide vers la deuxième sortie 5. Dans la deuxième position d'extrémité, le tampon 7 permet la mise en liaison du canal d'admission 6 avec la deuxième sortie 5 (comme illustré à la figure 2) tout en bloquant le passage du fluide vers la première sortie 4.

Le tampon 7 comporte à cet effet deux clapets 8, 9 chaque clapet 8, 9 est ici conformé de sorte à présenter un corps 12, 13 et une tête 10, 11 pour bloquer temporairement le passage du fluide par coopération avec des sièges ménagés dans le corps de vanne 3a. Les clapets 8, 9 sont par ailleurs solidarisés l'un à l'autre par une entretoise 14 reliée à ses extrémités respectivement à l'une des têtes de clapets 10, 11.

Par ailleurs, le corps 13 du deuxième clapet 9 est conformé en une tige reçue à coulissement selon l'axe X dans le couvercle 3b ce qui facilite le guidage dudit clapet 9, la tige se prolongeant par la tête 11 du deuxième clapet 9.

Le deuxième clapet 9 comporte un premier ressort 15 qui relie le deuxième clapet 9 à la vanne 2 et plus exactement ici au couvercle 3b de ladite vanne 2. Le premier ressort 15 entoure ici le corps 13 du deuxième clapet 9 et est fixé à une première extrémité à la tête 11 du deuxième clapet 9 et à une deuxième extrémité au couvercle 3b. Le premier ressort 15 est un ressort hélicoïdal. Le premier ressort 15 s'étend selon l'axe X.

Le corps 12 du premier clapet 8 est conformé en un piston formé d'une tige de fixation 12a à la tête 10 du premier clapet 8 et d'une tête de piston 12b.

Afin d'améliorer l'étanchéité entre l'actionneur 1 et la vanne 2, le premier clapet 8 comporte un élément d'étanchéité s'étendant entre la tête 10 du premier clapet 8 et une paroi 33 de l'actionneur 1. De la sorte, l'élément d'étanchéité entoure la partie du corps 12 du premier clapet 8 qui s'étend dans la vanne 2. L'élément d'étanchéité est ici un soufflet 19. Le soufflet 19 est par exemple à base de polytétrafluoroéthylène (plus connu sous l'acronyme PTFE) ou bien encore dans une autre matière élastique.

La paroi 33 est par exemple solidaire de la deuxième extrémité de l'actionneur 2 montée sur la vanne 2. La paroi 33 est typiquement fixée à un châssis 16 de l'actionneur 1 (s'étendant selon l'axe X) et montée de manière étanche sur la vanne 2 par l'intermédiaire d'un joint torique 34. Un deuxième joint torique 35 est agencé entre le châssis 16 et la vanne 2 sensiblement au niveau de la circonférence externe dudit châssis 16. De préférence, au moins la partie du châssis 16 en contact avec la vanne 2 est en polyétheréthercétone (plus connu sous l'acronyme anglais PEEK). Le châssis 16 et le bâti 3 sont ainsi solidaires l'un de l'autre.

De façon particulière la tête 10 du premier clapet 8 et le soufflet 19 sont d'une seule pièce améliorant encore l'étanchéité entre l'actionneur 1 et la vanne 2. De façon particulière le soufflet 19 et la paroi 33 sont d'une seule pièce améliorant encore l'étanchéité entre l'actionneur 1 et la vanne 2. Dans le cas présent, le soufflet 19, la paroi 33 et la tête 10 du premier clapet sont tous trois d'une seule pièce.

Le tampon 7 comporte ainsi ici :
- le premier clapet 8,
- le deuxième clapet 9, et
- l'entretoise 14.

Le premier clapet 8 comporte par ailleurs :
- la tête 10,
- le corps 12 comportant la tige de fixation 12a et la tête de piston 12b,
- le soufflet 19,
- et ici la paroi 33.

Le deuxième clapet 9 comporte par ailleurs :
- la tête 11,
- le corps 13, et
- le premier ressort 15.

La vanne 1 comporte également un coulisseau 17 qui est agencé dans le châssis 16 pour faire coulisser le tampon 7 selon l'axe X entre ses deux positions d'extrémités.

Le coulisseau 17 comprend à cet effet un noyau 18 s'étendant rectilignement selon l'axe X dans le châssis 16 de sorte à être monté coulissant dans le châssis 16 selon l'axe X.

Le noyau 18 est raccordé à une première de ses extrémités au tampon 7 de manière à être solidaire en translation du tampon 7 selon l'axe X. Le noyau 18 est ici raccordé à la tête de piston 12b du corps 12 du premier clapet 8 soit à la partie du premier clapet 8 s'étendant dans l'actionneur 1 et hors de la vanne 2.

Selon un mode de réalisation préféré, le noyau 18 et le tampon 7 ne sont pas directement fixés l'un à l'autre mais reliés entre eux par l'intermédiaire d'un deuxième ressort 21 du coulisseau 17, deuxième ressort 21 qui est donc fixé à une première extrémité au noyau 18 et à une deuxième extrémité au tampon 7 (ici à la tête de piston 12b du corps 12 du premier clapet 8). Le deuxième ressort 21 est un ressort hélicoïdal. Le deuxième ressort 21 s'étend ainsi selon l'axe X.

Non seulement le deuxième ressort 21 permet de transmettre les efforts entre le noyau 18 et le tampon 7 mais en outre le deuxième ressort 21 permet d'amortir le mouvement du tampon 7 lorsque le tampon 7 se déplace entre ses deux positions d'extrémité. En outre le deuxième ressort 21 permet de rattraper le jeu entre la course du noyau 18 et celle, plus courte, du tampon 7.

Le coulisseau 17 comporte par ailleurs un troisième ressort 22 qui relie le noyau 18 au châssis 16. Typiquement le troisième ressort 22 est fixé à une première de ses extrémités au châssis 16 et à une deuxième de ses extrémités au noyau 18, ici au niveau de l'extrémité du noyau 18 opposée à celle à laquelle est fixé le deuxième ressort 21. Le troisième ressort 22 est un ressort hélicoïdal. Le troisième ressort 22 s'étend ainsi selon l'axe X.

De façon particulière, le premier ressort 15 et le troisième ressort 22 présentent une raideur moins importante que celle du deuxième ressort 21. Typiquement, le deuxième ressort 21 a une raideur comprise entre 25 et 35 Newton par millimètre. Le premier ressort 15 et le troisième ressort 22 ont des raideurs inférieures à 1 Newton par millimètre. De préférence, le premier ressort 15 a une raideur plus importante que celle du troisième ressort 22.

Le coulisseau 17 comporte donc :
- le noyau 18,
- le deuxième ressort 21, et
- le troisième ressort 22.

Le noyau 18 est donc monté dans le châssis 16 uniquement par l'intermédiaire du deuxième ressort 21 et du troisième ressort 22.

La vanne 1 permet ainsi de créer un équipage mobile E composé d'éléments liés en translation selon l'axe X. L'équipage mobile E comporte ainsi ici le tampon 7 et le coulisseau 17 soit successivement :
- le premier ressort 15,
- le deuxième clapet 9,
- l'entretoise 14,
- le premier clapet 8,
- le deuxième ressort 21,
- le noyau 18,
- le troisième ressort 22.

Dès lors un déplacement du noyau 18 entraîne un déplacement du tampon 7 (par l'intermédiaire du deuxième ressort 21) selon l'axe X.

Le noyau 18 comprend par ailleurs deux aimants 23, 24 montés en opposition sur le noyau 18 et séparés entre eux par un anneau 26 en matériau ferromagnétique, les deux aimants 23, 24 étant également encadrés extérieurement par deux autres anneaux 25, 27 en matériau ferromagnétique.

Selon l'axe X, sont ainsi montés successivement sur le noyau 18 :
- un premier anneau 25 en matériau ferromagnétique,
- un premier aimant 23,
- un deuxième anneau 26 en matériau ferromagnétique,
- un deuxième aimant 24,
- un troisième anneau 27 en matériau ferromagnétique.

Les aimants 23, 24 et les anneaux 25, 26, 27 sont en outre conformés de manière à être coaxiaux au noyau 18 et à l'axe X et à entourer extérieurement le noyau 18.

Les aimants 23, 24 et les anneaux 25, 26, 27 sont fixés au noyau 18 de manière ici à être en contact les uns les autres. Ils définissent ainsi un premier couple d'anneaux formé du premier anneau 25 et du deuxième anneau 26 et un deuxième couple d'anneaux formé du deuxième anneau 26 et du troisième anneau 27.

Par ailleurs, l'actionneur 2 comporte une bobine 28 fixée au châssis 16 de manière à entourer extérieurement le noyau 18 et les aimants 23, 24 et anneaux 25, 26, 27 que porte le noyau 18. La bobine 28 est donc coaxiale au noyau 18.

L'actionneur 2 comporte par ailleurs un quatrième anneau 29 en matériau ferromagnétique et un cinquième anneau 30 en matériau ferromagnétique fixés au châssis 16 de manière à entourer extérieurement le noyau 18 et les aimants 23, 24 et anneaux 25, 26, 27 que le noyau 18 porte. Le quatrième anneau 29 et le cinquième anneau 30 sont ainsi coaxiaux au noyau 18. Le quatrième anneau 29 et le cinquième anneau 30 forment un troisième couple d'anneaux.

Le quatrième anneau 29 est juxtaposé à la première face annulaire de la bobine 28 et le cinquième anneau 30 est juxtaposé à la deuxième face annulaire de la bobine 28, lesdits quatrième 29 et cinquième 30 anneaux ne touchant toutefois pas la bobine 28.

Les anneaux 25, 26, 27, 29, 30 sont par exemple en inox 630.

Les aimants 23, 24 sont par exemple en néodyme.

L'axe du noyau 18 portant les aimants 23, 24 et les anneaux 25, 26, 27 est par exemple en matière métallique (comme en acier inoxydable tel que l'inox 304). De préférence, l'axe est prolongé à au moins une de ses deux extrémités (et préférentiellement à ses deux extrémités) par des tampons appartenant au noyau 18. Les tampons sont typiquement dans une matière plastique (comme en PEEK).

De préférence, le châssis 16 comporte une carcasse 20 en matière métallique entourant de manière circonférentielle au moins le troisième couple d'anneaux et la bobine 28. En particulier, aucune couche en matière isolante dédiée n'est agencée entre la carcasse 20 et le troisième couple d'anneaux et la bobine 28. La carcasse 20 remplit ainsi la même fonction que les rondelles 29, 30 et 25, 26, 27 de fermeture des lignes de champs. De préférence, la carcasse 20 est dans un matériau ferromagnétique comme en inox 630.

L'actionneur 1 comporte par ailleurs un connecteur 31 permettant de raccorder la bobine 28 à une source d'alimentation électrique.

De préférence, l'actionneur 1 comporte au moins un capteur 32 pour déterminer la position du tampon 7. A cet effet, l'actionneur 1 comporte ici un capteur 32 permettant de détecter la position du noyau 18 (représentative de celle du tampon 7). Par exemple, le capteur 32 est de type inductif. Le capteur 32 est typiquement fixé au châssis 16 de manière à être agencé dans le prolongement du noyau 18 selon l'axe X. Le capteur 32 est ainsi agencé dans un doigt de gant 36 localisé au niveau de la première extrémité de l'actionneur 1. Le doigt de gant 36 est par exemple en PEEK.

Le noyau 18 comportant un doigt 37 de détection en un matériau adapté, doigt 37 fixé à l'extrémité libre du noyau 18. De la sorte, selon l'éloignement du doigt 37 vis-à-vis du capteur 32 selon l'axe X, le capteur 32 peut estimer dans quelle position est le noyau 18 et donc dans quelle position est le tampon 7.

Le châssis 16 permet en conséquence de recevoir le coulisseau 17 et le capteur 32 et de les isoler de l'extérieur.

Ainsi, en service, l'alimentation de la bobine 28 provoque l'attraction de l'un des aimants et la répulsion de l'autre des aimants selon le sens d'alimentation de la bobine 28, la coopération du couple d'anneaux du châssis 16 avec respectivement l'un des couples d'anneaux du noyau 18 assurant le verrouillage du tampon 7 dans chacune de ses positions d'extrémités lorsque la bobine 28 cesse d'être alimentée.

Comme illustré à la figure 1, dans une première position mettant en relation le canal d'admission 6 avec la première sortie 4, le tampon 7 est dans une première position d'extrémité.

Pour faire basculer le tampon 7 dans sa deuxième position d'extrémité, on alimente la bobine 28 selon un premier sens. Ceci provoque l'attraction du premier aimant 23 et la répulsion du deuxième aimant 24 et donc une translation de tout l'équipage mobile E précité selon l'axe X.

Le déplacement du noyau 20 provoque la solidarisation (par accrochage magnétique) du premier couple d'anneaux 25, 26 avec le troisième couple d'anneaux 29, 30 ; lorsque l'alimentation dans la bobine 28 est coupée, le noyau 18 demeure ainsi en place grâce à cette solidarisation par les couples d'anneaux précités.

Dans cette position, illustrée à la figure 2, le tampon 7 est alors dans sa deuxième position d'extrémité permettant la mise en relation du canal d'admission 6 avec la deuxième sortie 5.

On note que les couples d'anneaux sont cependant légèrement décalés les uns des autres. Ce décalage est voulu et assuré grâce à l'action exercée par les ressorts sur le noyau 18, en particulier du fait que le premier ressort 15 et le deuxième ressort 21 soient contraints lorsque le tampon 7 est dans sa deuxième position d'extrémité.

Grâce à décalage, il s'avère en effet bien plus facile de faire basculer le noyau 18 de nouveau vers sa première position.

A cet effet, pour faire basculer le tampon 7 de nouveau dans sa première position d'extrémité, on alimente la bobine 28 selon un deuxième sens. Ceci provoque l'attraction du deuxième aimant 24 et la répulsion du premier aimant 23 et donc une translation de tout l'équipage mobile E précité selon l'axe X.

Le déplacement du noyau 20 provoque la solidarisation (par accrochage magnétique) du deuxième couple d'anneaux 26, 27 avec le troisième couple d'anneaux 29, 30 ; lorsque l'alimentation dans la bobine 28 est coupée, le noyau 18 demeure en place grâce à cette solidarisation par les couples d'anneaux précités.

On se retrouve donc de nouveau bloqué dans la première position d'extrémité du tampon 7 illustré à la figure 1.

On note que les couples d'anneaux sont cependant légèrement décalés les uns des autres. Ce décalage est voulu et assuré grâce à l'action exercée par les ressorts sur le noyau 18, en particulier du fait que le troisième ressort 22 soit contraint et le deuxième ressort 21 est à l'état d'équilibre lorsque le tampon 7 est dans sa première position d'extrémité.

Grâce à décalage, il s'avère en effet bien plus facile de faire basculer le noyau 18 de nouveau vers sa deuxième position.

Les ressorts permettent ainsi de maintenir le noyau 18 dans une position décalée au moment du verrouillage du noyau par accrochage magnétique des couples d'anneaux.

Dès lors, en cas de casse des ressorts, le tampon 7 reste bloqué dans une de ses positions d'extrémités ce qui permet de détecter un problème.

La vanne 2 ainsi décrite est une vanne 2 bistable (la vanne 2 n'ayant que deux positions d'équilibres).

L'actionneur 1 décrit associé est par ailleurs de fonctionnement simple et peu gourmand en énergie, la bobine 28 n'étant pas alimentée en permanence. En effet, une simple impulsion de courant « positif » ou « négatif » suffit pour faire basculer le tampon 7 d'une position d'extrémité à une autre. Par « impulsion », on entend ici une durée inférieure à 50 millisecondes et de préférence inférieure à 35 millisecondes.

L'intensité du courant traversant la bobine 28 est en outre peu élevée, de l'ordre (en valeur absolue) de quelques ampères, et de préférence inférieure à 3 ampères.

L'actionneur 1 est relié à une unité de commande de la machine 100 (unité non représentée ici) qui est configurée pour alimenter la bobine 28 de l'actionneur 1 par impulsions.

Par ailleurs, l'actionneur 1 est piloté électriquement ce qui permet de pouvoir l'agencer même dans des milieux aseptiques.

De plus, l'actionneur 1 est monté à étanchéité sur la vanne 2.

Bien entendu l'invention n'est pas limitée au mode de réalisation décrit et on peut y apporter des variantes sans sortir du cadre de l'invention tel que défini par les revendications.

En particulier, bien qu'ici on ait décrit une vanne trois voies, l'actionneur pourra être associé à d'autres types de vannes et par exemple une vanne deux voies. L'actionneur pourra ainsi présenter une autre forme que celle décrite et par exemple présenter un tampon à un seul clapet, l'actionneur n'ayant alors besoin que de deux ressorts pour maintenir les anneaux du noyau décalés vis à vis de ceux du châssis, un premier ressort étant agencé entre le tampon et le noyau et un deuxième ressort étant agencé entre le noyau et le châssis de l'actionneur. On rééquilibrera ainsi les efforts exercés par les ressorts sur le noyau vis-à-vis du mode de réalisation qui a été ici décrit afin que les couples d'anneaux demeurent décalés lors du verrouillage du noyau en position.

Par ailleurs, le noyau et le tampon pourront être directement fixés l'un à l'autre (avec éventuellement un jeu de rattrapage, le noyau et le tampon n'ayant pas nécessairement la même course). On pourra ainsi s'affranchir du ressort reliant le noyau au tampon. En variante, un autre élément de liaison qu'un ressort pourra relier le noyau au tampon comme un coussin en matière élastomère ou tout autre élément élastiquement déformable.

De la même façon, on pourra employer d'autres éléments élastiquement déformables pour remplacer le premier ressort et/ou le troisième ressort comme par exemple un coussin en matière élastomère.

La paroi à laquelle est accroché le soufflet du clapet pourra ne pas faire partie du soufflet.

L'actionneur pourrait s'affranchir d'une carcasse métallique, les anneaux suffisants seuls au bouclage des lignes de champ.

Le capteur décrit pourra être de type capacitif, à Effet Hall ...

## Revendications

1. Actionneur de vanne comprenant un équipage mobile agencé pour faire coulisser un tampon (7) dudit équipage selon un axe (X) donné entre deux positions d'extrémité, permettant en service au tampon de mettre en liaison un canal d'admission (6) de la vanne avec au moins une sortie de ladite vanne, l'équipage mobile comprenant un noyau (18) solidaire en translation du tampon selon l'axe (X) donné, l'actionneur comprenant une bobine (28) entourée de deux anneaux (29, 30) en matériau ferromagnétique, tous trois solidaires d'un châssis de l'actionneur de manière à entourer le noyau qui porte lui-même deux aimants (23, 24) montés en opposition sur le noyau au niveau de la bobine, l'actionneur de vanne étant **caractérisé en ce qu'** un anneau (26) en matériau ferromagnétique sépare les deux aimants également encadrés extérieurement par deux autres anneaux (25, 27) en matériau ferromagnétique,
l'alimentation de la bobine provoquant l'attraction de l'un des aimants et la répulsion de l'autre des aimants portés par le noyau selon le sens d'alimentation de la bobine, la coopération du couple d'anneaux du châssis avec respectivement l'un des couples d'anneaux du noyau assurant le verrouillage du tampon dans chacune de ses positions d'extrémités lorsque la bobine cesse d'être alimentée, l'équipage mobile comprenant par ailleurs au moins deux éléments élastiquement déformables (15, 22) liés au noyau de manière que les couples d'anneaux du noyau se trouvent décalés du couple d'anneaux du châssis lors du verrouillage du tampon dans chacune de ses positions d'extrémité.

2. Actionneur selon la revendication 1, dans lequel les éléments élastiquement déformables sont des ressorts.

3. Actionneur selon la revendication 2, dans lequel un premier ressort (22) de l'équipage mobile est agencé entre le noyau et le châssis et un deuxième ressort (15) de l'équipage mobile est apte à être agencé entre le tampon et un corps de la vanne.

4. Actionneur selon la revendication 3, dans lequel l'équipage mobile comporte un troisième ressort (21) agencé entre le noyau et le tampon.

5. Actionneur selon l'une des revendications précédentes, dans lequel l'équipage mobile comporte un élément d'étanchéité agencé entre le tampon (7) et le châssis (16) de l'actionneur.

6. Actionneur selon la revendication 5, dans lequel l'élément d'étanchéité est un soufflet (19).

7. Actionneur selon l'une des revendications précédentes, dans lequel l'actionneur comporte un capteur (32) de proximité pour détecter la position du noyau.

8. Actionneur selon la revendication 7, dans lequel le capteur (32) est un capteur inductif.

9. Vanne comprenant un actionneur de vanne selon l'une des revendications précédentes.

10. Machine comprenant un tel actionneur de vanne selon l'une des revendications 1 à 8 ainsi qu'une vanne associée audit actionneur de vanne.

11. Machine selon la revendication 10 comportant une unité de commande reliée à l'actionneur pour gérer l'alimentation par impulsion de la bobine de l'actionneur.

## Patentansprüche

1. Ventilaktor, umfassend eine bewegliche Ausrüstung, die ausgebildet ist, um einen Stopfen (7) der genannten Ausrüstung entlang einer gegebenen Ache (X) zwischen zwei Endpositionen zu verschieben, die es dem Stopfen im Betrieb ermöglichen, einen Einlasskanal (6) des Ventils mit mindestens einem Auslass des genannten Ventils in Verbindung zu bringen, wobei die bewegliche Ausrüstung einen Kern (18) umfasst, der mit dem Stopfen translationsfest entlang der gegebenen Achse (X) verbunden ist, wobei der Aktor eine Spule (28) umfasst, die von zwei Ringen (29, 30) aus ferromagnetischem Material umgeben ist, wobei alle drei fest mit einem Rahmen des Aktors verbunden sind, um den Kern, der selbst zwei Magneten (23, 24) trägt, die auf dem Kern im Bereich der Spule gegenüberliegend gelagert sind, zu umschließen,
wobei der Ventilaktor **dadurch gekennzeichnet ist, dass** ein Ring (26) aus ferromagnetischem Material die beiden Magneten trennt, die ebenfalls außen von zwei weiteren Ringen (25, 27) aus ferromagnetischem Material umrahmt sind,
wobei die Stromversorgung der Spule die Anziehung des einen der Magneten und die Abstoßung des anderen der von dem Kern getragenen Magneten je nach Stromversorgungsrichtung der Spule verursacht, wobei das Zusammenwirken des Paares von Ringen des Rahmens mit jeweils einem der Paare von Ringen des Kerns die Verriegelung des Stopfens in jeder seiner Endpositionen gewährleistet, wenn die Spule nicht mehr mit Strom versorgt wird, wobei die bewegliche Ausrüstung ferner mindestens zwei elastisch verformbare Elemente (15, 22) umfasst, die mit dem Kern derart verbunden sind, dass die Paare von Ringen des Kerns während der Verriegelung des Stopfens in jeder seiner Endpositionen versetzt zu dem Paar von Ringen des Rahmens sind.

2. Aktor nach Anspruch 1, bei dem die elastisch verformbaren Elemente Federn sind.

3. Aktor nach Anspruch 2, bei dem eine erste Feder (22) der beweglichen Ausrüstung zwischen dem Kern und dem Rahmen angeordnet ist und eine zweite Feder (15) der beweglichen Ausrüstung geeignet ist, zwischen dem Stopfen und einem Ventilkörper angeordnet zu werden.

4. Aktor nach Anspruch 3, bei dem die bewegliche Ausrüstung eine dritte Feder (21) umfasst, die zwischen dem Kern und dem Stopfen angeordnet ist.

5. Aktor nach einem der vorhergehenden Ansprüche, bei dem die bewegliche Ausrüstung ein Dichtungselement umfasst, das zwischen dem Stopfen (7) und dem Rahmen (16) des Aktors angeordnet ist.

6. Aktor nach Anspruch 5, bei dem das Dichtungselement ein Blasebalg (19) ist.

7. Aktor nach einem der vorhergehenden Ansprüche, bei dem der Aktor einen Näherungssensor (32) umfasst, um die Position des Kerns zu erfassen.

8. Aktor nach Anspruch 7, bei dem der Sensor (32) ein induktiver Sensor ist.

9. Ventil, umfassend einen Ventilaktor nach einem der vorhergehenden Ansprüche.

10. Maschine, umfassend einen solchen Ventilaktor nach einem der Ansprüche 1 bis 8 sowie ein Ventil, das mit dem genannten Ventilaktor verbunden ist.

11. Maschine nach Anspruch 10, umfassend eine Steuereinheit, die mit dem Aktor verbunden ist, um die Stromversorgung der Spule des Aktors durch Impulse zu steuern.

## Claims

1. A valve actuator comprising moving equipment arranged to cause a plug (7) of said equipment to slide along a given axis (X) between two end positions, making it possible in service for the plug to put an admission channel (6) of the valve into communication with at least one outlet of said valve, the moving equipment comprising a core (18) constrained to move in translation with the plug along the given axis (X), the actuator including a coil (28) lying between two rings (29, 30) of ferromagnetic material, all three of which are secured to a frame of the actuator so as to surround the core, which itself carries two magnets (23, 24) mounted in opposition on the core level with the coil,
The valve actuator being **characterized in that** a ring (26) of ferromagnetic material lies between the two magnets that also lie between two other rings (25, 27) of ferromagnetic material,
applying power to the coil causing one of the magnets carried by the core to be attracted and the other magnet to be repelled depending on the direction in which the coil is powered, co-operation between the pair of rings of the frame and a respective one of the pairs of rings of the core serving to lock the plug in each of its end positions when the coil ceases to be powered, the moving equipment also having at least two elastically deformable elements (15, 22) connected to the core in such a manner that the pairs of rings of the core are offset from the pair of rings of the frame while locking the plug in each of its end positions.

2. An actuator according to claim 1, wherein the elastically deformable elements are springs.

3. An actuator according to claim 2, wherein a first spring (22) of the moving equipment is arranged between the core and the frame, and a second spring (15) of the moving equipment is able to be arranged between the plug and a valve body.

4. An actuator according to claim 3, wherein the moving equipment includes a third spring (21) arranged between the core and the plug.

5. An actuator according to any preceding claim, wherein the moving equipment includes a sealing element arranged between the plug (7) and the frame (16) of the actuator.

6. An actuator according to claim 5, wherein the sealing element is a bellows (19).

7. An actuator according to any preceding claim, wherein the actuator includes a proximity sensor (32) for detecting the position of the core.

8. An actuator according to claim 7, wherein the sensor (32) is an inductive sensor.

9. A valve including a valve actuator according to any preceding claim.

10. A machine including such a valve actuator according to any one of claims 1 to 8 together with a valve associated with said valve actuator.

11. A machine according to claim 10, including a control unit connected to the actuator in order to manage powering the coil of the actuator with pulses.
